# EUROPEAN PATENT SPECIFICATION

(11) **EP 2 423 783 B1**
(45) Date of publication and mention of the grant of the patent: **18.12.2013**
(21) Application number: 11178377.5
(22) Date of filing: 23.08.2011
(51) Int. Cl.: G06F 1/32, H04W 52/50, H04W 52/04

(54) **Method for controlling power of radio access network device and radio access network device**
Verfahren zur Steuerung der Leistung einer Funkzugriffnetzwerkvorrichtung und Funkzugriffnetzwerkvorrichtung
Procédé pour contrôler la puissance d'un dispositif de réseau d'accès radio et dispositif de réseau d'accès radio

(30) Priority: 23.08.2010 CN 201010264323
(43) Date of publication of application: 29.02.2012
(73) Proprietor: Huawei Device Co., Ltd., Longgang District Shenzhen Guangdong 518129 (CN)
(72) Inventor: Wang, Hongya, 518129 Shenzhen (CN); Mi, Xiaolong, 518129 Shenzhen (CN)
(74) Representative: Isarpatent

(56) References cited:
- CN-A- 101 309 098
- CN-A- 101 516 142
- "Universal Serial Bus 3.0 Specification Chapter 3-11", , 12 November 2008 (2008-11-12), pages 41-440, XP55010091, [retrieved on 2011-10-20]
- "IEEE Standard for Local and metropolitan area networks Part 16: Air Interface for Broadband Wireless Access Systems;IEEE Std 802.16-2009 (Revision of IEEE Std 802.16-2004)", STANDARD NO.: IEEE STD 802.16-2009 (2009) - 29 MAY 2009, IEEE, NEW YORK, NY, USA, 29 May 2009 (2009-05-29), pages C1-2004, XP017604205, ISBN: 978-0-7381-5919-5

## Description

### FIELD OF THE INVENTION

The present invention relates to the field of communications technology, and in particular, to a method for controlling power of a radio access network device and a radio access network device.

### BACKGROUND OF THE INVENTION

With the rapid development of the radio communication, a radio access network device, for example, a radio data card, is widely used.

In the prior art, the radio access network device obtains the electricity amount from a terminal connected to the radio access network device through a port, so as to normally operate. Under normal conditions, a corresponding maximum transmit power is stored in a non-volatile memory inside the radio access network device. In order to ensure that the power supply consumption of the radio access network device does not exceed an electricity supply capability of the terminal connected to the radio access network device, a method of limiting the maximum transmit power is adopted; the radio access network device only can adopt a transmit power not greater than the maximum transmit power to establish a connection with a base station, so as to access the radio network. However, when the radio access network device is far away from the severed base station, as the transmit power of the radio access network device cannot satisfy the power required for reaching the base station by a signal, the uplink performance of the radio access network device is reduced, and the signal reaching the base station is weak, so that the operation performance of the radio access network is poor. In order to eliminate this problem, in the prior art, an enhanced power supply module is introduced in the radio access network device, so as to improve the maximum transmit power of the radio access network device. Alternatively, a power consumption detection circuit may be introduced in the radio access network device, and the maximum transmit power of the radio access network device is increased according to the result of the power consumption detection. According to the above two methods, the maximum transmit power of the radio access network device may be adjusted, so as to enhance the operation performance.

In the implementation of the present invention, the inventors find that the prior art at least has the following problems. According to the existing two methods, a new module is introduced in the radio access network device to control the transmit power of the radio access network device, so as to improve the operation performance of the radio access network device. However, the introduction of the new module not only increases the cost of the radio access network device, but also increases the power consumption of the radio access network device. Therefore, in the prior art, a control efficiency of the transmit power of the radio access network device is low.

A method for adjusting the wireless radio transmitting power of a wireless data card is disclosed in CN 101309098A. The method includes: detecting the power signal supplying to the wireless data card, wherein the power signal is supplied either by a common serial source or a strengthening power source; generating a power control signal according the detected power signal; and adjusting the wireless radio transmitting power of the wireless data card according the power control signal.

A stander configure descriptor is disclosed in
A standard configuration descriptor is disclosed in Universal serial BUS 3.0 specification Chapter 3-11, where, the unit mA is defined as the Maximum power consumption of the device from the bus when the device is fully operational, and when the device is operating in high-speed mode is expressed in 2-mA units and in 8-mA units when operating in SuperSpeed mode. D2 else discloses, in chapter 11.4, power distribution specification of USB 3.0, and the USB 3.0 having the ability of supplying multiple levels of power from one unit to six unit from VBUS.

A data card is disclosed in CN101516142A. The data card includes a radio communication unit for demodulating and decoding received Internet data according to Internet protocol to obtain basic data; a protocol control unit for carrying out 1394 protocol packaging for the basic data according to 1394 protocol to obtain 1394 protocol package data; and a 1394 interface unit for sending the 1394 protocol package data to user terminal.

### SUMMARY OF THE INVENTION

The present invention is directed to a method for controlling power of a radio access network device and a radio access network device, so as to solve a defect of the low control efficiency of the transmit power of the radio access network device in the prior art, and effectively improve the control efficiency of the transmit power of the radio access network device.

An embodiment of the present invention provides a method for controlling power of a radio access network device, where the method includes:
controlling, by a Base Band Unit (BBU), a Radio Frequency Unit (RFU) to establish a connection with a base station based on power not greater than pre-stored first transmit power, in which the first transmit power is maximum transmit power corresponding to a default electricity supply condition;
obtaining, by the RFU, second transmit power required for establishing the communication connection with the base station from the base station;
negotiating and adjusting, by the BBU, electricity supply information for the radio access network device with a terminal having one terminal port connected to an interface of the radio access network device if the second transmit power is greater than the first transmit power, so that the RFU operates based on the second transmit power; and
controlling, by the BBU, the RFU to establish the connection with the base station based on the second transmit power according to an adjusted electricity supply information, so as to normally initiate a service.

An embodiment of the present invention further provides a radio access network device, where the device includes:
a BBU, configured to control an RFU to establish a connection with a base station based on power not greater than pre-stored first transmit power, in which the first transmit power is maximum transmit power corresponding to a default electricity supply condition.
the RFU, configured to obtain second transmit power required for establishing the communication connection with the base station from the base station,
in which the BBU is further configured to negotiate and adjust electricity supply information for the radio access network device with a terminal having one terminal port connected to an interface of the radio access network device if the second transmit power is greater than the first transmit power, so that the RFU operates based on the second transmit power; and control the RFU to establish the connection with the base station based on the second transmit power according to the adjusted electricity information, so as to normally initiate a service; and
a Power Management Unit (PMU), configured to supply electricity for the BBU and the RFU.

According to the method for controlling power of a radio access network device and the radio access network device of the present invention, by negotiating and adjusting the electricity supply information for the radio access network device with the terminal connected to the radio access network device, the maximum transmit power of the RFU is improved, so as to ensure that the radio access network device normally initiates the service. By adopting the technical solution of the present invention, the control over the maximum transmit power of the radio access network device can be effectively improved, thereby effectively improving the operation performance of the radio access network device.

### BRIEF DESCRIPTION OF THE DRAWINGS

To illustrate the technical solutions according to the embodiments of the present invention or in the prior art more clearly, the accompanying drawings for describing the embodiments or the prior art are described briefly in the following. Apparently, the accompanying drawings in the following description are only some embodiments of the present invention, and a person skilled in the art can derive other drawings from the accompanying drawings without creative efforts.
FIG. 1 is a flow chart of a method for controlling power of a radio access network device according to Embodiment 1 of the present invention;
FIG. 2 is a flow chart of a method for controlling power of a radio access network device according to Embodiment 2 of the present invention;
FIG. 3 is a flow chart of a method for controlling power of a radio access network device according to Embodiment 3 of the present invention;
FIG. 4A and FIG. 4B are a flow chart of a method for controlling power of a radio access network device according to Embodiment 4 of the present invention;
FIG. 5 is a schematic structural diagram of a radio access network device according to Embodiment 5 of the present invention;
FIG. 6 is a schematic structural diagram of a radio access network device according to Embodiment 6 of the present invention;
FIG. 7 is a schematic structural diagram of a radio access network device according to Embodiment 7 of the present invention;
FIG. 8 is a schematic structural diagram of a radio access network device according to Embodiment 8 of the present invention; and
FIG. 9 is a schematic structural diagram of a radio access network device according to Embodiment 9 of the present invention.

### DETAILED DESCRIPTION OF THE EMBODIMENTS

In order to make the objectives, technical solutions, and advantages of the present invention more clearer, the technical solution of the present invention is clearly described in the following with reference to the accompanying drawings of the embodiments of the invention. It is obvious that the embodiments to be described are only a part rather than all of the embodiments of the present invention.

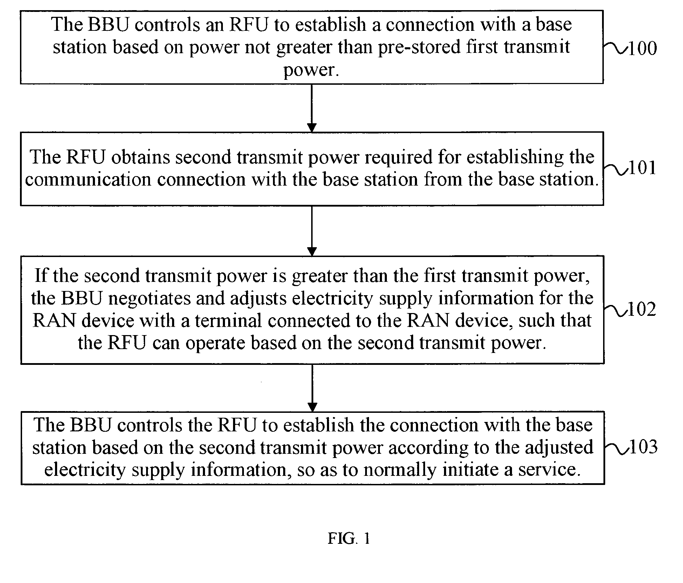

FIG. 1 is a flow chart of a method for controlling power of a radio access network (RAN) device according to Embodiment 1 of the present invention. According to this embodiment, the method for controlling power of a radio access network device is used in interactions between the radio access network device, for example, a radio data card, and a base station, and between the radio access network device and a terminal supplying electricity for the radio access network device. The radio access network device includes a Base Band Unit (BBU), a Radio Frequency Unit (RFU), and a Power Management Unit (PMU). As shown in FIG. 1, the method for controlling power of a radio access network device of this embodiment may specifically include the following steps.

Step 100: The BBU controls the RFU to establish a connection with the base station based on power not greater than pre-stored first transmit power, in which the first transmit power is maximum transmit power corresponding to a default electricity supply condition.

Specifically, corresponding to the default electricity supply condition, the maximum transmit power pre-stored in a non-volatile memory inside the BBU is the first transmit power. For example, according to the Universal Serial Bus (USB) 2.0 protocol, the maximum transmit power 21.5 dBm corresponding to an electricity condition that an electricity supply capability is of 5 V/500 mA may be selected as default configuration, that is, be set as the default first transmit power of 21.5 dBm. The BBU controls the RFU to establish the connection with the base station providing a service, so as to access the radio network. For an initial access, the BBU requires that the transmit power for the RFU to access the radio network is not greater than the first transmit power pre-stored in the BBU.

Step 101: The RFU obtains second transmit power required for establishing the communication connection with the base station from the base station.

Specifically, after step 100, the radio access network device establishes the connection with the base station, and the RFU in the radio access network device obtains the second transmit power required for the normal communication between the base station and the radio access network device. For example, the second transmit power may be 23 dBm.

Step 102: If the second transmit power is greater than the first transmit power, the BBU negotiates and adjusts electricity supply information for the radio access network device with a terminal connected to the radio access network device, so that the RFU can operate based on the second transmit power.

Specifically, here, the terminal is a terminal connected to the radio access network device. The terminal is connected to the radio access network device, and the terminal may supply the electricity for the radio access network device. When the second transmit power is greater than the first transmit power, the BBU negotiates and adjusts the electricity supply information for the radio access network device with the terminal, and the adjusted electricity supply information may ensure that the RFU in the radio access network device normally initiates a service based on the second transmit power. For example, the adjusted electricity information may be 5 V/900 mA (for example, according to the BC 1.1 Specification), the maximum transmit power corresponding to the electricity supply information is 23 dBm; the maximum transmit power corresponding to the electricity supply information equals to the second transmit power, which may satisfy a requirement for the radio access network device normally to initiate the service based on the second transmit power.

Step 103: The BBU controls the RFU to establish the connection with the base station based on the second transmit power according to the adjusted electricity supply information, so as to normally initiate the service.

Specifically, after negotiating with the terminal, the BBU may obtain adjusted electricity supply information. Because the adjusted electricity information may ensure that the radio access network device normally initiates the service with the second power, in this case, the BBU controls the RFU in the radio access network device to establish the connection with the base station based on the second transmit power according to the adjusted electricity supply information, so as to ensure that the RFU normally initiates the service.

According to the method for controlling power of a radio access network device of this embodiment, by negotiating and adjusting the electricity supply information for the radio access network device with the terminal connected to the radio access network device, the maximum transmit power of the radio access network device is improved, so as to ensure that the radio access network device normally initiates the service. By adopting the technical solution of this embodiment, the control over the maximum transmit power of the radio access network device can be effectively improved, thereby effectively improving the operation performance of the radio access network device.

On the basis of the embodiment, between step 102 and step 103 or after step 103, the method for controlling power of a radio access network device of this embodiment further includes: updating, by the BBU, the pre-stored first transmit power according to the adjusted electricity supply information. In this way, the maximum transmit power pre-stored in the BBU is changed, so that the normal service interaction between the radio access network device and the base station can be implemented subsequently corresponding to a condition of not exceeding the maximum transmit power.

On the basis of the embodiment, in step 102, the BBU negotiates and adjusts the electricity supply information for the radio access network device with the terminal connected to the radio access network device; specifically, the BBU negotiates and adjusts the electricity supply information for the radio access network device with the terminal through an interface. Here, the interface of the radio access network device may be a USB interface, for example, a USB 2.0 interface. The interface of the radio access network device may further be a Secure Digital Memory Card (SD) interface, a Peripheral Component Interconnect Express (PCI Express) interface, or a Multimedia Card (MMC) interface.

On the basis of the embodiment, after steps 102 and 103 of the embodiment, the method further includes the following steps:
(1) The BBU notifies the PMU of receiving an electricity supply amount corresponding to the adjusted electricity supply information.
(2) The PMU receives the electricity supply amount corresponding to the adjusted electricity supply information, and supplies the electricity for the BBU and the RFU according to the electricity supply amount corresponding to the adjusted electricity supply information.

Specifically, after step 102 of this embodiment, the BBU negotiates and adjusts the electricity supply information for the radio access network device with the terminal; after determining that the adjusted electricity supply information may ensure that the RFU in the radio access network device can operate based on the second transmit power, the BBU notifies the PMU of receiving the electricity supply amount corresponding to the adjusted electricity supply information. The PMU receives the electricity supply amount corresponding to the adjusted electricity supply information, and supplies the electricity for the BBU and the RFU according to the electricity supply amount corresponding to the adjusted electricity supply information. Then, step 103 of the embodiment is performed. In this way, it may be ensured that after the PMU supplies the electricity for the BBU and the RFU according to the adjusted electricity supply amount, the BBU controls the RFU to establish the connection with the base station based on the second transmit power, thereby further improving the control efficiency of the transmit power of the RFU.

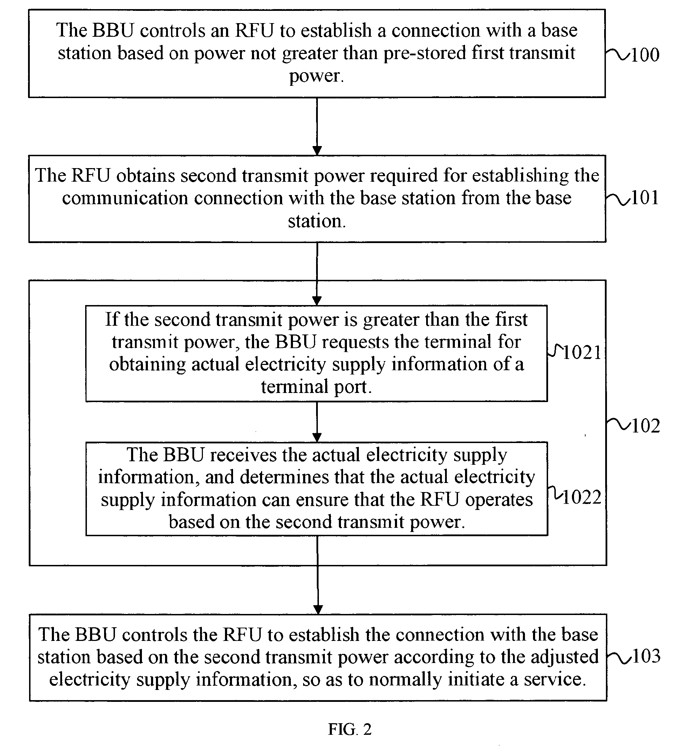

FIG. 2 is a flow chart of a method for controlling power of a radio access network device according to Embodiment 2 of the present invention. As shown in FIG. 2, on the basis of the technical solution of Embodiment 1, step 102 may specifically include the following steps.

Step 1021: If the second transmit power is greater than the first transmit power, the BBU requests actual electricity supply information of a terminal port from the terminal, in which the terminal port is a port connecting the terminal with the radio access network device.

Specifically, after the second transmit power is obtained according to step 101, when the second transmit power is greater than the first transmit power, the BBU obtains the actual electricity supply information of the terminal port from the terminal. Corresponding to normal conditions, the radio access network device establishes the communication connection with the base station based on the power not greater than the default first transmit power, that is, the maximum transmit power. However, the terminal port connected to the radio access network device can supply the electricity supply capability greater than the first transmit power, for example, when the electricity supply information of the first transmit power is 5 V/500 mA, actually, the terminal port may supply the electricity supply capability of 5 V/900 mA. In this case, the BBU requests the actual electricity supply information of the terminal port from the terminal. Here, the terminal port corresponds to the interface of the radio access network device connected to the terminal, and may also be a USB interface, an SD interface, a PCI Express interface, or an MMC interface.

Step 1022: The BBU receives the actual electricity supply information, and determines that the actual electricity supply information may ensure that the RFU operates based on the second transmit power.

Specifically, the BBU receives the actual electricity supply information of the terminal port sent by the terminal to the radio access network device, and then after judgment, it is determined that the actual electricity supply information can satisfy a requirement for the RFU to operate based on the second transmit power.

In this embodiment, the actual electricity supply information is the adjusted electricity supply information.

As shown in FIG. 2, steps 100, 101, and 103 in this embodiment are the same as Embodiment 1, and are not described herein again.

According to the method for controlling power of a radio access network device of this embodiment, by obtaining the actual electricity supply information of the terminal port of the terminal connected to the radio access network device, and determining that the actual electricity supply information may ensure that the radio access network device operates based on the second transmit power, the maximum transmit power of the radio access network device is improved, so as to ensure that the radio access network device normally initiates the service. By adopting the technical solution of this embodiment, the control over maximum transmit power of the radio access network device can be effectively improved, thereby effectively improving the operation performance of the radio access network device.

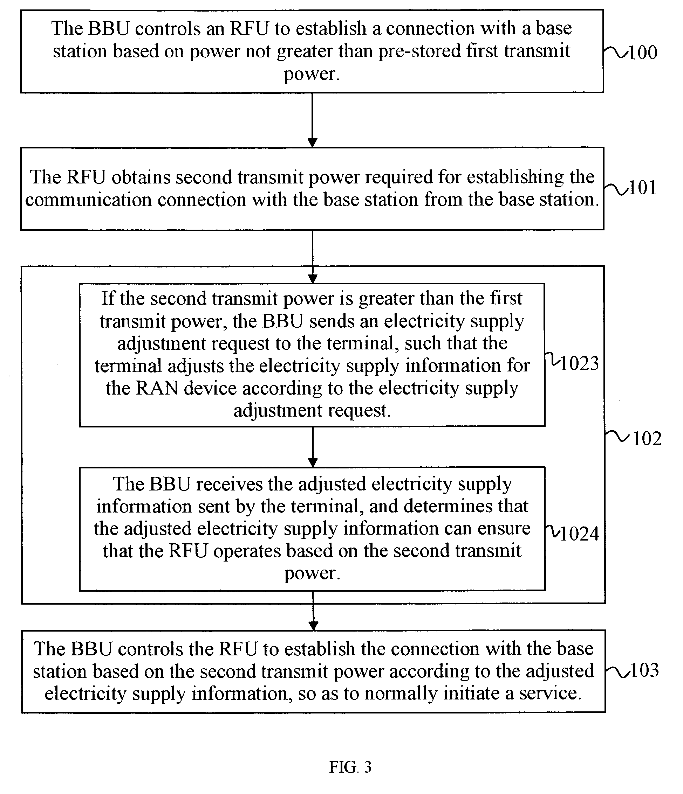

FIG. 3 is a flow chart of a method for controlling power of a radio access network device according to Embodiment 3 of the present invention. As shown in FIG. 3, on the basis of the technical solution of Embodiment 1, step 102 may specifically include the following steps.

Step 1023: If the second transmit power is greater than the first transmit power, the BBU sends an electricity supply adjustment request to the terminal, so that the terminal adjusts the electricity supply information for the radio access network device according to the electricity supply adjustment request.

Step 1024: The BBU receives the adjusted electricity supply information sent by the terminal, and determines that the adjusted electricity supply information may ensure that the RFU operates based on the second transmit power.

Specifically, this embodiment is different from Embodiment 2 in that when the second transmit power is greater than the first transmit power, the BBU directly sends the electricity supply adjustment request to the terminal. The terminal adjusts the electricity supply information for the radio access network device according to the electricity supply adjustment request. A table may be configured in the terminal, in which the table includes a plurality of common and different electricity supply conditions, for example, 5 v/500 mA, 5 v/800 mA, and 5 v/900 mA. When the radio access network device requests the terminal for adjusting the electricity supply information through the BBU, the terminal may enhance the electricity supply capability for the radio access network device according to the electricity supply information currently provided for the radio access network device, for example, the current electricity supply information of 5 v/500 mA may be adjusted to be 5 v/800 mA or 5 v/900 mA. However, here, the second transmit power may need to be considered, and the adjusted electricity supply information is required to enable the RFU in the radio access network device to operate based on the second transmit power. That is, if the adjusted electricity supply information cannot ensure that the radio access network device operates based on the second transmit power, the BBU continues to send the request to the terminal until the BBU obtains the electricity supply information which can ensure that the RFU operates based on the second transmit power. In this way, it may be ensured that in step 103, the BBU controls the RFU to establish the connection with the base station based on the second transmit power according to the adjusted electricity supply information, so as to normally initiate the service.

The terminal communicates with the interface of the radio access network device through the terminal port. The terminal port corresponds to the interface of the radio access network device connected to the terminal, and may also be a USB interface, an SD interface, a PCI Express interface, or an MMC interface.

As shown in FIG. 3, steps 100, 101, and 103 in this embodiment are the same as Embodiment 1, and are not described herein again.

According to the method for controlling power of a radio access network device of this embodiment, by requesting the terminal connected to the radio access network device to adjust the electricity supply information for the radio access network device, it is ensured that the radio access network device operates based on the second transmit power, so as to ensure that the radio access network device normally initiates the service. By adopting the technical solution of this embodiment, the control over maximum transmit power of the radio access network device can be effectively improved, thereby effectively improving the operation performance of the radio access network device.

It should be noted that, in the above embodiments, the terminal connected to the radio access network device may be a computer, a camera, or other mobile terminal devices that may support a power supply for the radio access network device.

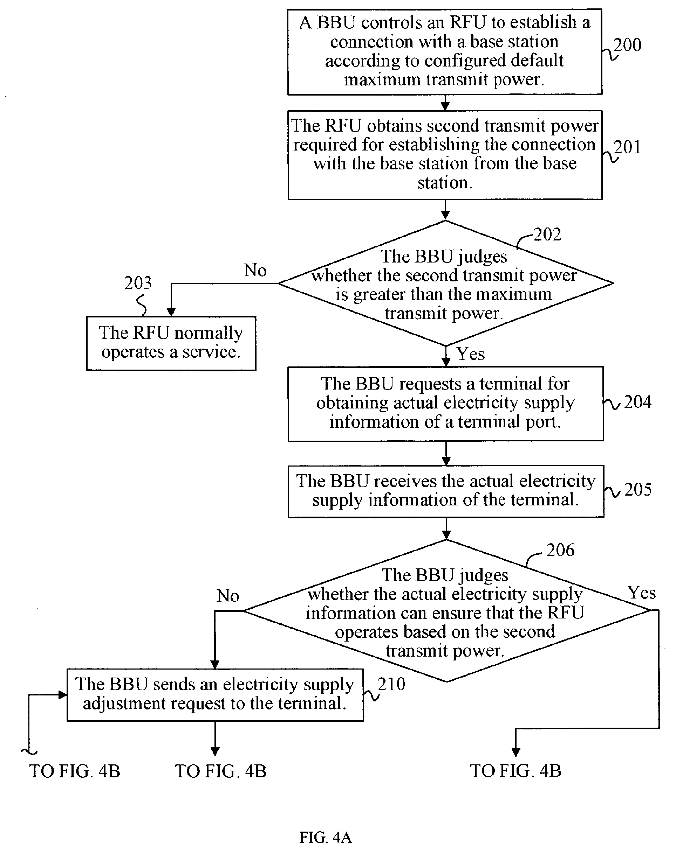

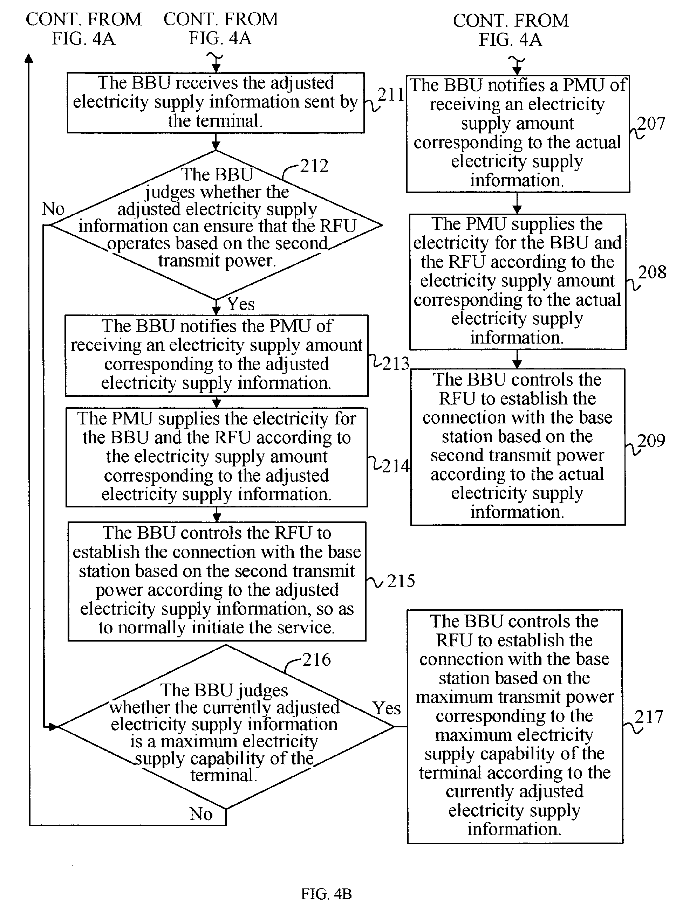

FIG. 4A and FIG. 4B are a flow chart of a method for controlling power of a radio access network device according to Embodiment 4 of the present invention. As shown in FIG. 4A and FIG. 4B, the method for controlling power of a radio access network device of this embodiment may specifically include the following steps.
Step 200: A BBU controls an RFU to establish a connection with a base station according to a configured default maximum transmit power; and step 201 is performed.
Specifically, the default configuration is the maximum transmit power corresponding to a default electricity supply condition, for example, first transmit power in Embodiment 1.
Step 201: The RFU obtains second transmit power required for establishing the connection with the base station from the base station; and step 202 is performed.
Step 202: The BBU judges whether the second transmit power is greater than the maximum transmit power. If the second transmit power is not greater than the maximum transmit power, step 203 is performed; if the second transmit power is greater than the maximum transmit power, step 204 is performed.
Step 203: If the second transmit power is not greater than the maximum transmit power, the RFU normally operates a service.
Step 204: If the second transmit power is greater than the maximum transmit power, the BBU requests actual electricity supply information of a terminal port from a terminal; and step 205 is performed.
Step 205: The BBU receives the actual electricity supply information of the terminal; and step 206 is performed.
Step 206: The BBU judges whether the actual electricity supply information may ensure that the RFU operates based on the second transmit power, and if the actual electricity supply information may ensure that the RFU operates based on the second transmit power, step 207 is performed; if the actual electricity supply information may not ensure that the RFU operates based on the second transmit power, step 210 is performed.
Step 207: When the actual electricity supply information may ensure that the RFU operates based on the second transmit power, the BBU notifies a PMU of receiving an electricity supply amount corresponding to the actual electricity supply information; and step 208 is performed.
Step 208: The PMU supplies the electricity for the BBU and the RFU according to the electricity supply amount corresponding to the actual electricity supply information; and step 209 is performed.
Step 209: The BBU controls the RFU to establish the connection with the base station based on the second transmit power according to the actual electricity supply information, so as to normally initiate the service.
Step 210: The BBU sends an electricity supply adjustment request to the terminal; and step 211 is performed.
Step 211: The BBU receives the adjusted electricity supply information sent by the terminal; and step 212 is performed.
Step 212: The BBU judges whether the adjusted electricity supply information may ensure that the RFU operates based on the second transmit power. If the adjusted electricity supply information may ensure that the RFU operates based on the second transmit power, step 213 is performed; if adjusted electricity supply information may not ensure that the RFU operates based on the second transmit power, step 216 is performed.
Step 213: When the adjusted electricity supply information may ensure that the RFU operates based on the second transmit power, the BBU notifies the PMU of receiving an electricity supply amount corresponding to the adjusted electricity supply information; and step 214 is performed.
Step 214: The PMU supplies the electricity for the BBU and the RFU according to the electricity supply amount corresponding to the adjusted electricity supply information; and step 215 is performed.
Step 215: The BBU controls the RFU to establish the connection with the base station based on the second transmit power according to the adjusted electricity supply information, so as to normally initiate the service.
Step 216: The BBU judges whether the currently adjusted electricity supply information is a maximum electricity supply capability of the terminal. If the adjusted electricity supply information is the maximum electricity supply capability of the terminal, step 217 is performed; if the adjusted electricity supply information is not the maximum electricity supply capability of the terminal, step 210 is performed.
Step 217: The BBU controls the RFU to establish the connection with the base station based on the maximum transmit power corresponding to the maximum electricity supply capability of the terminal according to the currently adjusted electricity supply information.
Specifically, according to steps 212, 216, and 217, when the adjusted electricity supply information received by the BBU is the maximum electricity supply capability that the terminal can provide, but still cannot satisfy the electricity supply capability requested by the second transmit power and required by the base station, at this time, the BBU controls the RFU to establish the connection with the base station according to the maximum transmit power corresponding to the maximum electricity supply capability that the terminal can provide.

When a position of the radio access network changes, or the radio network accessing the radio access network device changes, the power of the radio access network device may be controlled through the above steps, so as to ensure that the radio access network device normally initiates the service.

According to the method for controlling power of a radio access network device of this embodiment, an operation power of the radio access network device can be effectively controlled, so as to ensure that the radio access network device normally initiates the service. By adopting the technical solution of this embodiment, the control over the maximum transmit power of the radio access network device can be effectively improved, thereby effectively improving the operation performance of the radio access network device.

A person skilled in the art should understand that, all or a part of the steps of the method according to the embodiments may be implemented by a program instructing relevant hardware. The program may be stored in a computer readable storage medium. When the program is executed, the steps of the method according to the embodiments are performed. The storage medium may be any medium capable of storing program codes, such as a ROM, a RAM, a magnetic disk, or an optical disk.

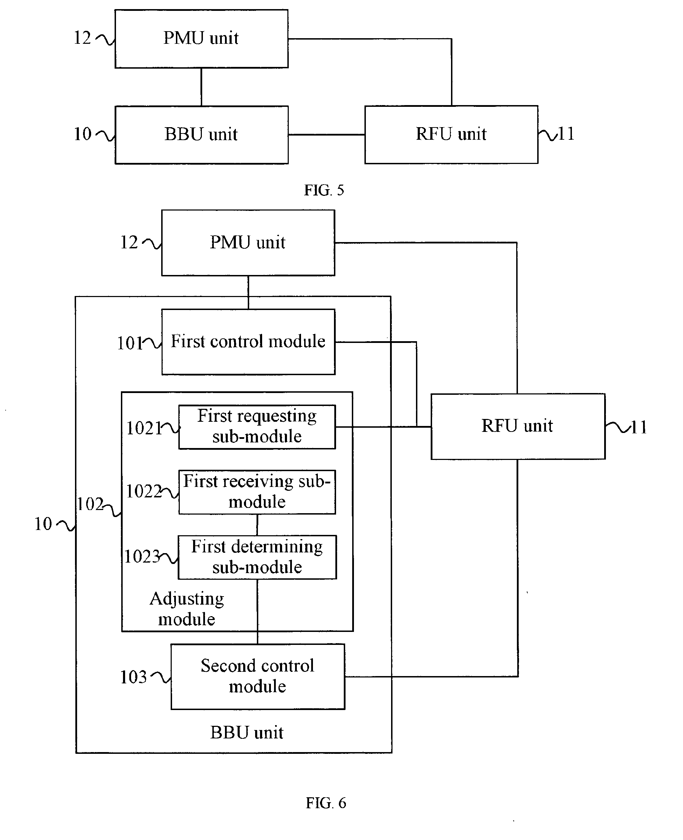

FIG. 5 is a schematic structural diagram of a radio access network device according to Embodiment 5 of the present invention. As shown in FIG. 5, the radio access network device of this embodiment may include a BBU 10, an RFU 11, and a PMU 12.

In the radio access network device of this embodiment, the BBU 10 is connected to the RFU 11. The BBU 10 is configured to control the RFU 11 to establish a connection with a base station based on power not greater than pre-stored first transmit power, in which the first transmit power is maximum transmit power corresponding to a default electricity supply condition. The RFU 11 is configured to obtain second transmit power required for establishing the communication connection with the base station from the base station. The BBU 10 is further configured to negotiate and adjust electricity supply information for the radio access network device with a terminal connected to the radio access network device if the second transmit power is greater than the first transmit power, so that the RFU 11 can operate based on the second transmit power; and control the RFU 11 to establish the connection with the base station based on the second transmit power according to the adjusted electricity information, so as to normally initiate a service. The PMU 12 is connected to the BBU 10 and the RFU 11 each, and is configured to supply electricity for the BBU 10 and the RFU 11.

An interaction process of the units in the radio access network device of this embodiment is the same as the implementation mechanism of the method for controlling power of a radio access network device in Embodiment 1. Therefore, the details are not described herein again. For the details, refer to the description in Embodiment 1.

According to the radio access network device of this embodiment, by negotiating and adjusting the electricity supply information for the radio access network device with the terminal connected to the radio access network device, the maximum transmit power of the radio access network device is improved, so as to ensure that the radio access network device normally initiates the service. By adopting the technical solution of this embodiment, the control over the maximum transmit power of the radio access network device can be effectively improved, thereby effectively improving the operation performance of the radio access network device.

FIG. 6 is a schematic structural diagram of a radio access network device according to Embodiment 6 of the present invention. As shown in FIG. 6, on the basis of Embodiment 5, in the radio access network device of this embodiment, the BBU 10 may specifically include a first control module 101, an adjusting module 102, and a second control module 103.

In the BBU 10 of this embodiment, the first control module 101 is configured to control the RFU 11 to establish the connection with the base station based on the power not greater than the first transmit power, in which the first transmit power is the maximum transmit power corresponding to the default electricity supply condition. The adjusting module 102 is connected to the RFU 11, and is configured to negotiate and adjust the electricity supply information for the radio access network device with the terminal connected to the radio access network device if the second transmit power required by the base station and obtained by the RFU 11 is greater than the pre-stored first transmit power, so that the RFU 11 can operate based on the second transmit power. The second control module 103 is connected to the adjusting module 102, and is configured to control the RFU 11 to establish the connection with the base station based on the second transmit power according to the electricity supply information adjusted by the adjusting module 102, so as to normally initiate the service.

In this embodiment, the adjusting module 102 may further include a first requesting sub-module 1021, a first receiving sub-module 1022, and a first determining sub-module 1023.

The first requesting sub-module 1021 is connected to the RFU 11, and is configured to request actual electricity supply information of a terminal port from the terminal connected to the radio access network device if the second transmit power required by the base station and obtained by the RFU 11 is greater than the pre-stored first transmit power, in which the terminal port is the port connecting the terminal with the radio access network device. The first receiving sub-module 1022 is configured to receive the actual electricity supply information of the terminal port requested by the first requesting sub-module 1021. The first determining sub-module 1023 is connected to the first receiving sub-module 1022, and is configured to determine that the actual electricity supply information received by the first receiving sub-module 1022 may ensure that the RFU 11 operates based on the second transmit power required by the base station. Here, the corresponding actual electricity supply information is the adjusted electricity supply information described in Embodiment 5. At this time, the second control module 103 is connected to the first determining sub-module 1023, and is configured to control the RFU 11 to establish the connection with the base station based on the second transmit power according to the adjusted electricity supply information determined by the first determining sub-module 1023, that is, the actual electricity supply information, so as to normally initiate the service.

An interaction process of the units and modules in the radio access network device of this embodiment is the same as the implementation mechanism of the method for controlling power of a radio access network device in Embodiment 2. Therefore, the details are not described herein again. For the details, refer to the description in Embodiment 2.

According to the radio access network device of this embodiment, an operation power of the radio access network device can be effectively controlled, so as to ensure that the radio access network device normally initiates the service. By adopting the technical solution of this embodiment, the control over the maximum transmit power of the radio access network device can be effectively improved, thereby effectively improving the operation performance of the radio access network device.

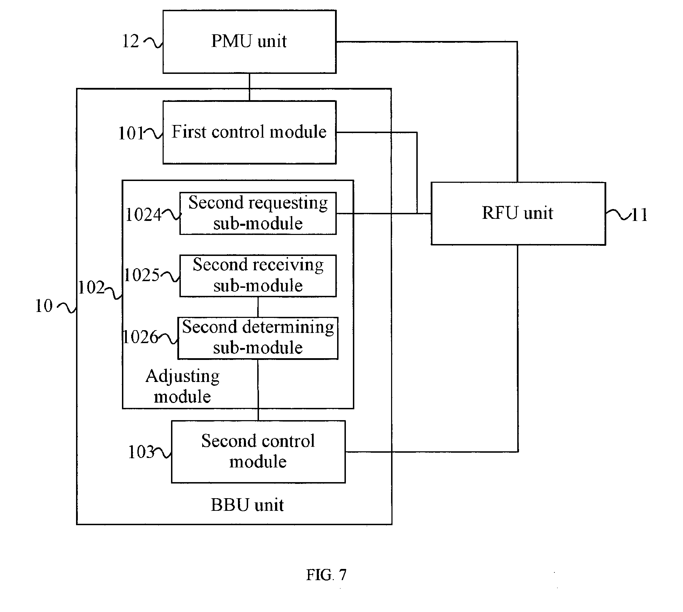

FIG. 7 is a schematic structural diagram of a radio access network device according to Embodiment 7 of the present invention. As shown in FIG. 7, on the basis of Embodiment 5, in the radio access network device of this embodiment, the BBU 10 may specifically include a first control module 101, an adjusting module 102, and a second control module 103. The details are not described herein again. For the details, refer to the description in Embodiment 6.

In this embodiment, the adjusting module 102 may further include a second requesting sub-module 1024, a second receiving sub-module 1025, and a second determining sub-module 1026.

The second requesting sub-module 1024 is connected to the RFU 11, and is configured to send an electricity supply adjustment request to the terminal connected to the radio access network device if the second transmit power required by the base station and obtained by the RFU 11 is greater than the pre-stored first transmit power, so that the terminal adjusts the electricity supply information for the radio access network device according to the electricity supply adjustment request. The second receiving sub-module 1025 is configured to receive the adjusted electricity supply information of the terminal requested by the second requesting sub-module 1024. The second determining sub-module 1026 is connected to the second receiving sub-module 1025, and is configured to determine that the adjusted electricity supply information of the terminal received by the second receiving sub-module 1025 may ensure that the RFU 11 operates based on the second transmit power. At this time, the second control module 103 is connected to the second determining sub-module 1026, and is configured to control the RFU 11 to establish the connection with the base station based on the second transmit power according to the adjusted electricity supply information determined by the second determining sub-module 1026, so as to normally initiate the service.

An interaction process of the units and modules in the radio access network device of this embodiment is the same as the implementation mechanism of the method for controlling power of a radio access network device in Embodiment 3. Therefore, the details are not described herein again. For the details, refer to the description in Embodiment 3.

According to the radio access network device of this embodiment, an operation power of the radio access network device can be effectively controlled, so as to ensure that the radio access network device normally initiates the service. By adopting the technical solution of this embodiment, the control over the maximum transmit power of the radio access network device can be effectively improved, thereby effectively improving the operation performance of the radio access network device.

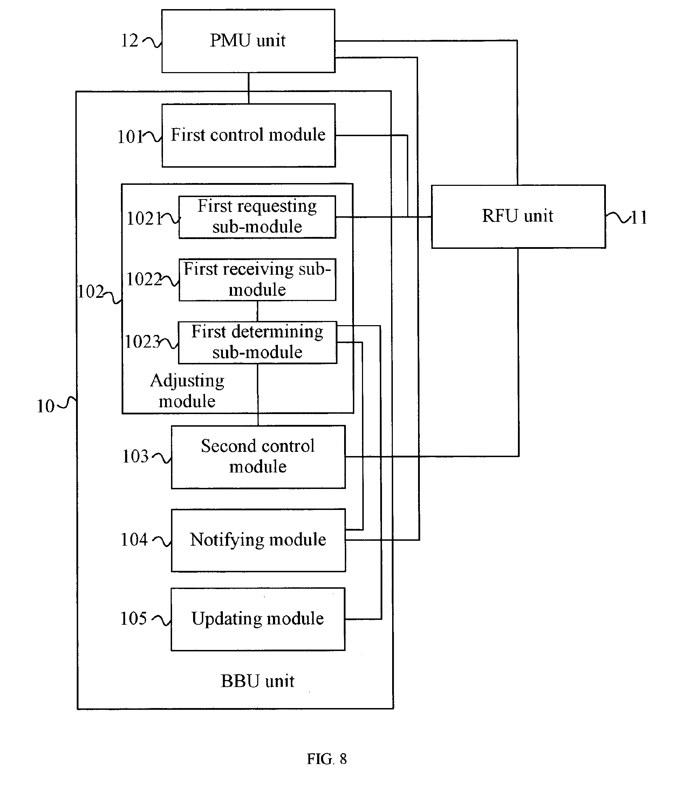

FIG. 8 is a schematic structural diagram of a radio access network device according to Embodiment 8 of the present invention. As shown in FIG. 8, in the radio access network device of this embodiment, on the basis of Embodiment 6, the BBU 10 may further include a notifying module 104. The notifying module 104 is connected to the first determining sub-module 1023 and the PMU 12 each, and configured to notify the PMU 12 of receiving an electricity supply amount corresponding to the actual electricity supply information when the first determining sub-module 1023 determines that the actual electricity supply message received by the first receiving sub-module 1022 may ensure that the RFU 11 operates based on the second transmit power required by the base station. Correspondingly, the PMU 12 is configured to receive the electricity supply amount corresponding to the actual electricity supply information, and supply the electricity for the BBU 10 and the RFU 11 according to the electricity supply amount corresponding to the adjusted electricity supply information. Here, the adjusted electricity supply information is the actual electricity supply information.

In this embodiment, the radio access network device may further include an updating module 105 connected to the first determining sub-module 1023. The updating module 105 is configured to update the pre-stored first transmit power according to the adjusted electricity supply information, that is, the actual electricity supply information, when the first determining sub-module 1023 determines that the actual electricity supply information received by the first receiving sub-module 1022 may ensure that the RFU 11 operates based on the second transmit power required by the base station.

This embodiment is a technical solution further extended on the basis of Embodiment 6, and may also be a technical solution extended on the basis of Embodiment 7 accordingly. The implementation mechanism is similar to the relevant embodiments. Therefore, the details are not described herein again. For the details, refer to the relevant embodiments.

An interaction process of the units and modules in the radio access network device of this embodiment is the same as the implementation mechanism of the method for controlling power of a radio access network device in the above embodiment. Therefore, the details are not described herein again. For the details, refer to the relevant embodiment.

According to the radio access network device of this embodiment, an operation power of the radio access network device can be effectively controlled, so as to ensure that the radio access network device normally initiates the service. By adopting the technical solution of this embodiment, the control over the maximum transmit power of the radio access network device can be effectively improved, thereby effectively improving the operation performance of the radio access network device.

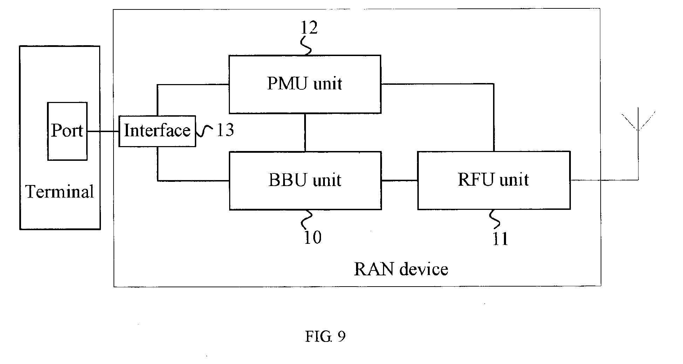

FIG. 9 is a schematic structural diagram of a radio access network device according to Embodiment 9 of the present invention. As shown in FIG. 9, in this embodiment, on the basis of the technical solution of Embodiment 5, the radio access network device may further include an interface 13. The interface 13 connects the BBU 10 with the terminal, and the terminal sends the electricity supply information to the BBU 10 through the interface 13. The interface 13 is connected to the PMU 12, and the terminal can supply the electricity amount for the PMU 12 through the interface 13 according to the adjusted electricity supply information, so that the PMU 12 supplies the electricity for the BBU 10 and the RFU 11.

As shown in FIG. 9, a terminal port corresponding to the interface of the radio access network device at the terminal side exists, so as to ensure that the terminal communicates with the radio access network device. The terminal port corresponds to the interface of the radio access network device connected to the terminal, and may also be a USB port, an SD port, a PCI Express port, or an MMC port.

According to the radio access network device of this embodiment, it can be ensured that the radio access network device normally initiates the service, thereby effectively improving the operation performance of the radio access network device.

It should be noted that, in Embodiment 9, the BBU 10 may adopt the BBU 10 in Embodiment 6. Referring to FIG. 6 and FIG. 9, the interface 13 is connected to the first requesting sub-module 1021 in the adjusting module 102 in the BBU 10. The first requesting sub-module 1021 sends a request for obtaining the actual electricity supply information of the terminal port connected to the radio access network device from the terminal. The interface 13 is configured to transmit the actual electricity supply information to the corresponding terminal when the second transmit power required by the base station and obtained by the RFU 11 is greater than the pre-stored first transmit power. The interface 13 is connected to the first receiving sub-module 1022 in the adjusting module 102 in the BBU 10, and is configured to transmit the actual electricity supply information of the terminal port sent by the terminal to the first receiving sub-module 1022. Other details are as described in the above relevant embodiments, and are not described herein again. For the details, refer to the relevant embodiments.

It should be noted that, in Embodiment 9, the BBU 10 may adopt the BBU 10 in Embodiment 7. Referring to FIG. 7 and FIG. 9, at this time, the interface 13 is connected to the second requesting sub-module 1024 in the adjusting module 102 in the BBU 10. The second requesting sub-module 1024 sends a request for adjusting the electricity supply information of the radio access network device. The interface 13 is configured to transmit the electricity supply information to the corresponding terminal if the second transmit power required by the base station and obtained by the RFU 11 is greater than the pre-stored first transmit power. The interface 13 is connected to the second receiving sub-module 1025 in the adjusting module 102 in the BBU 10, and is configured to transmit the adjusted electricity supply information of the terminal sent by the terminal to the second receiving sub-module 1025. Other details are as described in the above relevant embodiments, and are not described herein again. For the details, refer to the relevant embodiments.

It should be noted that, the radio access network device in Embodiment 9 may extend the corresponding technical solution of Embodiment 8. The details are as described in the above relevant embodiment, and are not described herein again. For the details, refer to the relevant embodiment.

The device embodiments are merely exemplary. Units described as separate components may be or may not be physically separated. Components shown as units may be or may not be physical units, that is, may be integrated or distributed to a plurality of network units. Some or all of the modules may be selected to achieve the objective of the solution of the embodiment according to actual demands. A person skilled in the art can understand and implement the present invention without making creative efforts.

Finally, it should be noted that the above embodiments are merely provided for describing the technical solutions of the present invention, but not intended to limit the present invention. It should be understood by a person skilled in the art that although the present invention has been described in detail with reference to the embodiments, modifications can be made to the technical solutions described in the embodiments, or equivalent replacements can be made to some technical features in the technical solutions, as long as such modifications or replacements do not depart from the protection scope of the present invention as defined by the claims.

## Claims

1. A method for controlling power of a radio access network, RAN, device, comprising:
controlling (100), by a Base Band Unit, BBU (10), a Radio Frequency Unit, RFU (11), to establish a connection with a base station, BS, based on a power not greater than a pre-stored first transmit power, wherein the first transmit power is a maximum transmit power corresponding to a default electricity supply condition;
obtaining (101), by the RFU (11), a second transmit power required for establishing the communication connection with the base station, BS, from the base station, BS;
negotiating and adjusting (102), by the BBU (10), electricity supply information for the radio access network, RAN, device with a terminal having one terminal port connected to an interface (13) of the radio access network, RAN, device if the second transmit power is greater than the first transmit power, so that the RFU (11) operates based on the second transmit power; and
controlling (103), by the BBU (10), the RFU (11) to establish the connection with the base station, BS, based on the second transmit power according to the adjusted electricity supply information, so as to normally initiate a service.

2. The method for controlling power of a radio access network, RAN, device according to claim 1, further comprising:
notifying, by the BBU (10), a Power Management Unit, PMU (12), of receiving an electricity supply amount corresponding to the adjusted electricity supply information; and
receiving, by the PMU (12), the electricity supply amount corresponding to the adjusted electricity supply information and supplying electricity for the BBU (10) and the RFU (11) according to the electricity supply amount corresponding to the adjusted electricity supply information.

3. The method for controlling power of a radio access network, RAN, device according to claim 1, wherein the negotiating and adjusting (102) by the BBU (10), the electricity supply information for the radio access network, RAN, device with the terminal connected to the radio access network, RAN, device if the second transmit power is greater than the first transmit power, so that the RFU (11) operates based on the second transmit power comprises:
requesting (1021), by the BBU (10), actual electricity supply information of the terminal port from the terminal if the second transmit power is greater than the first transmit power, wherein the terminal port is a port connecting the terminal with the radio access network, RAN, device; and
receiving (1022), by the BBU (10), the actual electricity supply information, and determining that the actual electricity supply information ensures that the RFU (11) operates based on the second transmit power, wherein the actual electricity supply information is the adjusted electricity supply information.

4. The method for controlling power of a radio access network, RAN, device according to claim 1, wherein the negotiating and adjusting (102) by the BBU (10), the electricity supply information for the radio access network, RAN, device with the terminal connected to the radio access network, RAN, device if the second transmit power is greater than the first transmit power, so that the RFU (11) operates based on the second transmit power comprises:
sending, by the BBU (10), an electricity supply adjustment request to the terminal if the second transmit power is greater than the first transmit power so that the terminal adjusts the electricity supply information for the radio access network, RAN, device according to the electricity supply adjustment request; and
receiving, by the BBU (10), the adjusted electricity supply information, and determining that the adjusted electricity supply information ensures that the RFU (11) operates based on the second transmit power.

5. The method for controlling power of a radio access network, RAN, device according to any one of claims 1 to 4, further comprising:
updating, by the BBU (10), the pre-stored first transmit power according to the adjusted electricity supply information.

6. The method for controlling power of a radio access network, RAN, device according to any one of claims 1 to 4, wherein the negotiating and adjusting (102), by the BBU (10), the electricity supply information for the radio access network, RAN, device with the terminal connected to the radio access network, RAN, device if the second transmit power is greater than the first transmit power comprises:
negotiating and adjusting, by the BBU (10), the electricity supply information for the radio access network, RAN, device with the terminal through the interface if the second transmit power is greater than the first transmit power.

7. The method for controlling power of a radio access network, RAN, device according to claim 6, wherein the interface is a Universal Serial Bus, USB, interface, a Secure Digital Memory Card, SD, interface, a Multimedia Card, MMC, interface, or a Peripheral Component Interconnect Express, PCI Express, interface.

8. A radio access netwok, RAN, device comprising:
a Base Band Unit, BBU (10), configured to control a Radio Frequency Unit, RFU (11) to establish a connection with a base station, BS, based on a power not greater than a first transmit power, wherein the first transmit power is a maximum transmit power corresponding to a default electricity supply condition;
the RFU (11), configured to obtain a second transmit power required for establishing the communication connection with the base station, BS, from the base station, BS,
wherein the BBU (10) is further configured to negotiate and adjust electricity supply information for the radio access network, RAN, device with a terminal having one terminal port connected to an interface (13) of the radio access network, RAN, device if the second transmit power is greater than the first transmit power, so that the RFU (11) operates based on the second transmit power; and to control the RFU (11) to establish the connection with the base station, BS, based on the second transmit power according to adjusted electricity information, so as to normally initiate a service; and
a Power Management Unit, PMU (12), configured to supply electricity for the BBU (10) and the RFU (11).

9. The radio access network, RAN, device according to claim 8, wherein the BBU (10) comprises:
a first control module (101) configured to control the RFU (11) to establish the connection with the base station, BS, based on the power not greater than the first transmit power, wherein the first transmit power is the maximum transmit power corresponding to the default electricity supply condition;
an adjusting module (102), configured to negotiate and adjust the electricity supply information for the radio access network, RAN, device with the terminal connected to the radio access network, RAN, device if the second transmit power is greater than the first transmit power, so that the RFU (11) operates based on the second transmit power; and
a second control module (103), configured to control the RFU (11) to establish the connection with the base station, BS, based on the second transmit power according to the adjusted electricity supply information, so as to normally initiate the service.

10. The radio access network, RAN, device according to claim 9, wherein the BBU (10) further comprises a notifying module (104), wherein
the notifying module (104) is configured to notify the PMU (12) of receiving an electricity supply amount corresponding to the adjusted electricity supply information; and
the PMU (12) is further configured to receive the electricity supply amount corresponding to the adjusted electricity supply information, and supply electricity for the BBU (10) and the RFU (11) according to the electricity supply amount corresponding to the adjusted electricity supply information.

11. The radio access network device according to claim 9, wherein the adjusting module (102) comprises:
a first requesting sub-module (1021), configured to request actual electricity supply information of the terminal port from the terminal if the second transmit power is greater than the first transmit power, wherein the terminal port is a port connecting the terminal with the radio access network, RAN, device;
a first receiving sub-module (1022), configured to receive the actual electricity supply information; and
a first determining sub-module (1023), configured to determine that the actual electricity supply information ensures that the RFU (11) operates based on the second transmit power, wherein the actual electricity supply information is the adjusted electricity supply information.

12. The radio access network, RAN, device according to claim 9, wherein the adjusting module (102) comprises:
a second requesting sub-module (1024), adapted for the BBU (10) to send an electricity supply adjustment request to the terminal if the second transmit power is greater than the first transmit power, so that the terminal adjusts the electricity supply information for the radio access network, RAN, device according to the electricity supply adjustment request;
a second receiving sub-module (1025), configured to receive the adjusted electricity supply information; and
a second determining sub-module (1026), configured to determine that the adjusted electricity supply information ensures that the RFU (11) operates based on the second transmit power.

13. The radio access network, RAN, device according to any one of claims 9 to 12, wherein the BBU (10) further comprises:
an updating module (105), configured to update the pre-stored first transmit power according to the adjusted electricity supply information.

14. The radio access network, RAN, device according to any one of claims 8 to 12, further comprising the interface (13), configured to connect the BBU (10) with the terminal, wherein the terminal sends the electricity supply information to the BBU (10) through the interface (13); and the interface (13) is further connected to the PMU (12), and the terminal supplies the electricity amount to the PMU (12) through the interface (13) according to the adjusted electricity supply information.

## Patentansprüche

1. Verfahren zum Steuern der Leistung einer Funkzugriffsnetzvorrichtung, RAN-Vorrichtung, das Folgendes umfasst:
Steuern (100) durch eine Grundbandeinheit, BBU (10), einer Hochfrequenzeinheit, RFU (11), um eine Verbindung mit einer Basisstation, BS, anhand einer Leistung, die nicht größer als eine im Voraus gespeicherte erste Sendeleistung ist, aufzubauen, wobei die erste Sendeleistung eine maximale Sendeleistung ist, die einem voreingestellten Elektrizitätsversorgungszustand entspricht;
Erhalten (101) durch die RFU (11) einer zweiten Sendeleistung, die erforderlich ist, um die Kommunikationsverbindung mit der Basisstation, BS, aufzubauen, von der Basisstation, BS;
Verhandeln und Einstellen (102) durch die BBU (10) von Elektrizitätsversorgungsinformationen für die Funkzugriffsnetzvorrichtung, RAN-Vorrichtung, mit einem Endgerät, das einen Endgerätanschluss besitzt, der mit einer Schnittstelle (13) der Funkzugriffsnetzvorrichtung, RAN-Vorrichtung, verbunden ist, falls die zweite Sendeleistung größer ist als die erste Sendeleistung, so dass die RFU (11) anhand der zweiten Sendeleistung arbeitet; und
Steuern (103) durch die BBU (10) der RFU (11), um die Verbindung mit der Basisstation, BS, anhand der zweiten Sendeleistung in Übereinstimmung mit den eingestellten Elektrizitätsversorgungsinformationen aufzubauen, um so einen Dienst normal zu beginnen.

2. Verfahren zum Steuern der Leistung einer Funkzugriffsnetzvorrichtung, RAN-Vorrichtung, nach Anspruch 1, das ferner Folgendes umfasst:
Melden durch die BBU (10) an eine Leistungsmanagementeinheit, PMU (12), des Empfangs eines Elektrizitätsversorgungsbetrags, der den eingestellten Elektrizitätsversorgungsinformationen entspricht; und
Empfangen durch die PMU (12) des Elektrizitätsversorgungsbetrags, der den eingestellten Elektrizitätsversorgungsinformationen entspricht, und Liefern von Elektrizität für die BBU (10) und die RFU (11) in Übereinstimmung mit dem Elektrizitätsversorgungsbetrag, der den eingestellten Elektrizitätsversorgungsinformationen entspricht.

3. Verfahren zum Steuern der Leistung einer Funkzugriffsnetzvorrichtung, RAN-Vorrichtung, nach Anspruch 1, wobei das Verhandeln und Einstellen (102) durch die BBU (10) der Elektrizitätsversorgungsinformationen für die Funkzugriffsnetzvorrichtung, RAN-Vorrichtung, mit dem Endgerät, das mit der Funkzugriffsnetzvorrichtung, RAN-Vorrichtung, verbunden ist, falls die zweite Sendeleistung größer ist als die erste Sendeleistung, so dass die RFU (11) anhand der zweiten Sendeleistung arbeitet, Folgendes umfasst:
Anfordern (1021) durch die BBU (10) tatsächlicher Elektrizitätsversorgungsinformationen des Endgerätanschlusses von dem Endgerät, falls die zweite Sendeleistung größer ist als die erste Sendeleistung, wobei der Endgerätanschluss ein Anschluss ist, der das Endgerät mit der Funkzugriffsnetzvorrichtung, RAN-Vorrichtung, verbindet; und
Empfangen (1022) durch die BBU (10) der tatsächlichen Elektrizitätsversorgungsinformationen und Bestimmen, dass die tatsächlichen Elektrizitätsversorgungsinformationen sicherstellen, dass die RFU (11) anhand der zweiten Sendeleistung arbeitet, wobei die tatsächlichen Elektrizitätsversorgungsinformationen die eingestellten Elektrizitätsversorgungsinformationen sind.

4. Verfahren zum Steuern der Leistung einer Funkzugriffsnetzvorrichtung, RAN-Vorrichtung, nach Anspruch 1, wobei das Verhandeln und Einstellen (102) durch die BBU (10) der Elektrizitätsversorgungsinformationen für die Funkzugriffsnetzvorrichtung, RAN-Vorrichtung, mit dem Endgerät, das mit der Funkzugriffsnetzvorrichtung, RAN-Vorrichtung verbunden ist, falls die zweite Sendeleistung größer ist als die erste Sendeleistung, so dass die RFU (11) anhand der zweiten Sendeleistung arbeitet, Folgendes umfasst:
Senden durch die BBU (10) einer Elektrizitätsversorgungs-Einstellanforderung zu dem Endgerät, falls die zweite Sendeleistung größer ist als die erste Sendeleistung, so dass das Endgerät die Elektrizitätsversorgungsinformationen für die Funkzugriffsnetzvorrichtung, RAN-Vorrichtung, in Übereinstimmung mit der Elektrizitätsversorgungs-Einstellanforderung einstellt; und
Empfangen durch die BBU (10) der eingestellten Elektrizitätsversorgungsinformationen und Bestimmen, dass die eingestellten Elektrizitätsversorgungsinformationen sicherstellen, dass die RFU (11) anhand der zweiten Sendeleistung arbeitet.

5. Verfahren zum Steuern der Leistung einer Funkzugriffsnetzvorrichtung, RAN-Vorrichtung, nach einem der Ansprüche 1 bis 4, das ferner Folgendes umfasst:
Aktualisieren durch die BBU (10) der im Voraus gespeicherten ersten Sendeleistung in Übereinstimmung mit den eingestellten Elektrizitätsversorgungsinformationen.

6. Verfahren zum Steuern der Leistung einer Funkzugriffsnetzvorrichtung, RAN-Vorrichtung, nach einem der Ansprüche 1 bis 4, wobei das Verhandeln und Einstellen (102) durch die BBU (10) der Elektrizitätsversorgungsinformationen für die Funkzugriffsnetzvorrichtung, RAN-Vorrichtung, mit dem Endgerät, das mit der Funkzugriffsnetzvorrichtung, RAN-Vorrichtung, verbunden ist, falls die zweite Sendeleistung größer ist als die erste Sendeleistung, Folgendes umfasst:
Verhandeln und Einstellen durch die BBU (10) der Elektrizitätsversorgungsinformationen für die Funkzugriffsnetzvorrichtung, RAN-Vorrichtung, mit dem Endgerät über die Schnittstelle, falls die zweite Sendeleistung größer ist als die erste Sendeleistung.

7. Verfahren zum Steuern der Leistung einer Funkzugriffsnetzvorrichtung, RAN-Vorrichtung, nach Anspruch 6, wobei die Schnittstelle eine Schnittstelle eines universellen seriellen Busses, USB-Schnittstelle, eine Schnittstelle einer sicheren digitalen Speicherkarte, SD-Schnittstelle, eine Schnittstelle einer Multimediakarte, MMC-Schnittstelle, oder eine Peripheriekomponentenverbindungs-Expressschnittstelle, PCI-Expressschnittstelle, ist.

8. Funkzugriffsnetzvorrichtung, RAN-Vorrichtung, die Folgendes umfasst:
eine Grundbandeinheit, BBU (10), die konfiguriert ist, eine Hochfrequenzeinheit, RFU (11), zu steuern, um eine Verbindung mit einer Basisstation, BS, anhand einer Leistung, die nicht größer als eine erste Sendeleistung ist, aufzubauen, wobei die erste Sendeleistung eine maximale Sendeleistung ist, die einem voreingestellten Elektrizitätsversorgungszustand entspricht;
die RFU (11), die konfiguriert ist, eine zweite Sendeleistung, die erforderlich ist, um die Kommunikationsverbindung mit der Basisstation, BS, aufzubauen, von der Basisstation, BS, zu erhalten,
wobei die BBU (10) ferner konfiguriert ist, Elektrizitätsversorgungsinformationen für die Funkzugriffsnetzvorrichtung, RAN-Vorrichtung, mit einem Endgerät, das einen Endgerätanschluss besitzt, der mit einer Schnittstelle (13) der Funkzugriffsnetzvorrichtung, RAN-Vorrichtung, verbunden ist, zu verhandeln und
einzustellen, falls die zweite Sendeleistung größer ist als die erste Sendeleistung, so dass die RFU (11) anhand der zweiten Sendeleistung arbeitet; und die RFU (11) zu steuern, um die Verbindung mit der Basisstation, BS, anhand der zweiten Sendeleistung in Übereinstimmung mit eingestellten Elektrizitätsinformationen aufzubauen, um einen Dienst normal zu beginnen; und
eine Leistungsmanagementeinheit, PMU (12), die konfiguriert ist, Elektrizität für die BBU (10) und die RFU (11) zu liefern.

9. Funkzugriffsnetzvorrichtung, RAN-Vorrichtung, nach Anspruch 8, wobei die BBU (10) Folgendes umfasst:
ein erstes Steuermodul (101), das konfiguriert ist, die RFU (11) anhand der Leistung, die nicht größer als die erste Sendeleistung ist, zu steuern, um die Verbindung mit der Basisstation, BS, aufzubauen, wobei die erste Sendeleistung die maximale Sendeleistung ist, die dem voreingestellten Elektrizitätsversorgungszustand entspricht;
ein Einstellmodul (102), das konfiguriert ist, die Elektrizitätsversorgungsinformationen für die Funkzugriffsnetzvorrichtung, RAN-Vorrichtung, mit dem Endgerät, das mit der Funkzugriffsnetzvorrichtung, RAN-Vorrichtung, verbunden ist, zu verhandeln und einzustellen, falls die zweite Sendeleistung größer ist als die erste Sendeleistung, so dass die RFU (11) anhand der zweiten Sendeleistung arbeitet; und
ein zweites Steuermodul (103), das konfiguriert ist, die RFU (11) anhand der zweiten Sendeleistung in Übereinstimmung mit den eingestellten Elektrizitätsversorgungsinformationen zu steuern, um die Verbindung mit der Basisstation, BS aufzubauen, um so den Dienst normal zu beginnen.

10. Funkzugriffsnetzvorrichtung, RAN-Vorrichtung, nach Anspruch 9, wobei die BBU (10) ferner ein Meldemodul (104) umfasst, wobei
das Meldemodul (104) konfiguriert ist, der PMU (12) den Empfang eines Elektrizitätsversorgungsbetrags, der den eingestellten Elektrizitätsversorgungsinformationen entspricht, zu melden; und
die PMU (12) ferner konfiguriert ist, den Elektrizitätsversorgungsbetrag, der den eingestellten Elektrizitätsversorgungsinformationen entspricht, zu empfangen und Elektrizität für die BBU (10) und die RFU (11) in Übereinstimmung mit dem Elektrizitätsversorgungsbetrag, der den eingestellten Elektrizitätsversorgungsinformationen entspricht, zu liefern.

11. Funkzugriffsnetzvorrichtung nach Anspruch 9, wobei das Einstellmodul (102) Folgendes umfasst:
ein erstes Anforderungsuntermodul (1021), das konfiguriert ist, tatsächliche Elektrizitätsversorgungsinformationen des Endgerätanschlusses von dem Endgerät anzufordern, falls die zweite Sendeleistung größer ist als die erste Sendeleistung, wobei der Endgerätanschluss ein Anschluss ist, der das Endgerät mit der Funkzugriffsnetzvorrichtung, RAN-Vorrichtung, verbindet;
ein erstes Empfangsuntermodul (1022), das konfiguriert ist, die tatsächlichen Elektrizitätsversorgungsinformationen zu empfangen; und
ein erstes Bestimmungsuntermodul (1023), das konfiguriert ist, zu bestimmen, dass die tatsächlichen Elektrizitätsversorgungsinformationen sicherstellen, dass die RFU (11) anhand der zweiten Sendeleistung arbeitet, wobei die tatsächlichen Elektrizitätsversorgungsinformationen die eingestellten Elektrizitätsversorgungsinformationen sind.

12. Funkzugriffsnetzvorrichtung, RAN-Vorrichtung, nach Anspruch 9, wobei das Einstellmodul (102) Folgendes umfasst:
ein zweites Anforderungsuntermodul (1024), das dafür ausgelegt ist, die BBU (10) zu veranlassen, eine Elektrizitätsversorgungs-Einstellanforderung zu dem Endgerät zu senden, falls die zweite Sendeleistung größer ist als die erste Sendeleistung, so dass das Endgerät die Elektrizitätsversorgungsinformationen für die Funkzugriffsnetzvorrichtung, RAN-Vorrichtung, in Übereinstimmung mit der Elektrizitätsversorgungs-Einstellanforderung einstellt;
ein zweites Empfangsuntermodul (1025), das konfiguriert ist, die eingestellten Elektrizitätsversorgungsinformationen zu empfangen; und
ein zweites Bestimmungsuntermodul (1026), das konfiguriert ist, zu bestimmen, dass die eingestellten Elektrizitätsversorgungsinformationen sicherstellen, dass die RFU (11) anhand der zweiten Sendeleistung arbeitet.

13. Funkzugriffsnetzvorrichtung, RAN-Vorrichtung, nach einem der Ansprüche 9 bis 12, wobei die BBU (10) ferner Folgendes umfasst:
ein Aktualisierungsmodul (105), das konfiguriert ist, die im Voraus gespeicherte erste Sendeleistung in Übereinstimmung mit den eingestellten Elektrizitätsversorgungsinformationen zu aktualisieren.

14. Funkzugriffsnetzvorrichtung, RAN-Vorrichtung, nach einem der Ansprüche 8 bis 12, die ferner die Schnittstelle (13) umfasst, die konfiguriert ist, die BBU (10) mit dem Endgerät zu verbinden, wobei das Endgerät die Elektrizitätsversorgungsinformationen zu der BBU (10) über die Schnittstelle (13) sendet; und die Schnittstelle (13) ferner mit der PMU (12) verbunden ist und das Endgerät den Elektrizitätsbetrag zu der PMU (12) über die Schnittstelle (13) in Übereinstimmung mit den eingestellten Elektrizitätsversorgungsinformationen liefert.

## Revendications

1. Procédé de commande de la puissance d'un dispositif de réseau d'accès radio, RAN (Radio Access Network), comprenant :
la commande (100), par une Unité de Bande de Base, BBU (Base Band Unit) (10), d'une Unité Radio Fréquence, RFU (Radio Frequency Unit) (11), afin d'établir une connexion avec une station de base, BS (Base Station), sur la base d'une puissance non supérieure à une première puissance d'émission stockée à l'avance, la première puissance d'émission étant une puissance d'émission maximale correspondant à une condition d'alimentation électrique par défaut ;
l'obtention (101), par la RFU (11), d'une seconde puissance d'émission exigée pour établir la connexion de communication avec la station de base, BS, en provenance de la station de base (BS) ;
la négociation et l'ajustement (102), par la BBU (10), d'informations d'alimentation électrique destinées au dispositif de réseau d'accès radio, RAN, avec un terminal ayant un port de terminal connecté à une interface (13) du dispositif de réseau d'accès radio, RAN, si la seconde puissance d'émission est supérieure à la première puissance d'émission, afin que la RFU (11) fonctionne sur la base de la seconde puissance d'émission ; et
la commande (103), par la BBU (10), de la RFU (11) afin d'établir la connexion avec la station de base, BS, sur la base de la seconde puissance d'émission conformément aux informations d'alimentation électrique ajustées, afin de démarrer normalement un service.

2. Procédé de commande de la puissance d'un dispositif de réseau d'accès radio, RAN, selon la revendication 1, comprenant en outre :
la notification, par la BBU (10), à une Unité de Gestion de Puissance, PMU, (Power Management Unit) (12), de la réception d'une quantité d'alimentation électrique correspondant aux informations d'alimentation électrique ajustées ; et
la réception, par la PMU (12), de la quantité d'alimentation électrique correspondant aux informations d'alimentation électrique ajustées et l'alimentation en électricité de la BBU (10) et de la RFU (11) conformément à la quantité d'alimentation électrique correspondant aux informations d'alimentation électrique ajustées.

3. Procédé de commande de la puissance d'un dispositif de réseau d'accès radio, RAN, selon la revendication 1, dans lequel la négociation et l'ajustement (102), par la BBU (10), des informations d'alimentation électrique destinées au dispositif de réseau d'accès radio, RAN, avec le terminal connecté au dispositif de réseau d'accès radio, RAN, si la seconde puissance d'émission est supérieure à la première puissance d'émission, afin que la RFU (11) fonctionne sur la base de la seconde puissance d'émission, comprennent :
la demande (1021) au terminal, par la BBU (10), d'informations d'alimentation électrique effectives du port de terminal, si la seconde puissance d'émission est supérieure à la première puissance d'émission, le port de terminal étant un port connectant le terminal au dispositif de réseau d'accès radio, RAN ; et
la réception (1022), par la BBU (10), des informations d'alimentation électrique effectives, et la détermination du fait que les informations d'alimentation électrique effectives garantissent que la RFU (11) fonctionne sur la base de la seconde puissance d'émission, les informations d'alimentation électrique effectives étant les informations d'alimentation électrique ajustées.

4. Procédé de commande de la puissance d'un dispositif de réseau d'accès radio, RAN, selon la revendication 1, dans lequel la négociation et l'ajustement (102), par la BBU (10), des informations d'alimentation électrique destinées au dispositif de réseau d'accès radio, RAN, avec le terminal connecté au dispositif de réseau d'accès radio, RAN, si la seconde puissance d'émission est supérieure à la première puissance d'émission, afin que la RFU (11) fonctionne sur la base de la seconde puissance d'émission, comprennent :
l'envoi au terminal, par la BBU (10), d'une demande d'ajustement d'alimentation électrique, si la seconde puissance d'émission est supérieure à la première puissance d'émission afin que le terminal ajuste les informations d'alimentation électrique destinées au dispositif de réseau d'accès radio, RAN, conformément à la demande d'ajustement d'alimentation électrique ; et
la réception, par la BBU (10), des informations d'alimentation électrique ajustées, et la détermination du fait que les informations d'alimentation électrique ajustées garantissent que la RFU (11) fonctionne sur la base de la seconde puissance d'émission.

5. Procédé de commande de la puissance d'un dispositif de réseau d'accès radio, RAN, selon l'une quelconque des revendications 1 à 4, comprenant en outre :
la mise à jour, par la BBU (10), de la première puissance d'émission stockée à l'avance conformément aux informations d'alimentation électrique ajustées.

6. Procédé de commande de la puissance d'un dispositif de réseau d'accès radio, RAN, selon l'une quelconque des revendications 1 à 4, dans lequel la négociation et l'ajustement (102), par la BBU (10), des informations d'alimentation électrique destinées au dispositif de réseau d'accès radio, RAN, avec le terminal connecté au dispositif de réseau d'accès radio, RAN, si la seconde puissance d'émission est supérieure à la première puissance d'émission, comprennent :
la négociation et l'ajustement, par la BBU (10), des informations d'alimentation électrique destinées au dispositif de réseau d'accès radio, RAN, avec le terminal par l'intermédiaire de l'interface si la seconde puissance d'émission est supérieure à la première puissance d'émission.

7. Procédé de commande de la puissance d'un dispositif de réseau d'accès radio, RAN, selon la revendication 6, dans lequel l'interface est une interface de Bus Série Universel, USB (Universal Serial Bus), une interface de Carte Mémoire Numérique Sécurisée (SD) (Security Digital), une interface de Carte Multimédia (MMC) (Multimedia Card), ou une interface d'Interconnexion de Composants Périphériques Express, PCI Express (Peripheral Component Interconnect Express).

8. Dispositif de réseau d'accès radio, RAN, comprenant :
une Unité de Bande de Base, BBU (10), configurée pour commander une Unité Radio Fréquence, RFU (11), afin d'établir une connexion avec une station de base, BS, sur la base d'une puissance non supérieure à une première puissance d'émission, la première puissance d'émission étant une puissance d'émission maximale correspondant à une condition d'alimentation électrique par défaut ;
la RFU (11), configurée pour obtenir de la station de base (BS) une seconde puissance d'émission exigée pour établir la connexion de communication avec la station de base, BS,
dans lequel la BBU (10) est en outre configurée pour négocier et ajuster des informations d'alimentation électrique destinées au dispositif de réseau d'accès radio, RAN, avec un terminal ayant un port de terminal connecté à une interface (13) du dispositif de réseau d'accès radio, RAN, si la seconde puissance d'émission est supérieure à la première puissance d'émission, afin que la RFU (11) fonctionne sur la base de la seconde puissance d'émission; et pour commander la RFU (11) afin d'établir la connexion avec la station de base, BS, sur la base de la seconde puissance d'émission conformément aux informations d'alimentation électrique ajustées, afin de démarrer normalement un service ; et
une Unité de Gestion de Puissance, PMU (12), configurée pour alimenter en électricité la BBU (10) et la RFU (11).

9. Dispositif de réseau d'accès radio, RAN, selon la revendication 8, dans lequel la BBU (10) comprend :
un premier module de commande (101), configuré pour commander la RFU (11) afin d'établir la connexion avec la station de base, BS, sur la base de la puissance non supérieure à la première puissance d'émission, la première puissance d'émission étant la puissance d'émission maximale correspondant à la condition d'alimentation électrique par défaut ;
un module d'ajustement (102), configuré pour négocier et ajuster les informations d'alimentation électrique destinées au dispositif de réseau d'accès radio, RAN, avec le terminal connecté au dispositif de réseau d'accès radio, RAN, si la seconde puissance d'émission est supérieure à la première puissance d'émission, afin que la RFU (11) fonctionne sur la base de la seconde puissance d'émission ; et
un second module de commande (103), configuré pour commander la RFU (11) afin d'établir la connexion avec la station de base, BS, sur la base de la seconde puissance d'émission, conformément aux informations d'alimentation électrique ajustées, afin de démarrer normalement le service.

10. Dispositif de réseau d'accès radio, RAN, selon la revendication 9, dans lequel la BBU (10) comprend en outre un module de notification (104), dans lequel :
le module de notification (104) est configuré pour notifier à la PMU (12) la réception d'une quantité d'alimentation électrique correspondant aux informations d'alimentation électrique ajustées ; et
la PMU (12) est en outre configurée pour recevoir la quantité d'alimentation électrique correspondant aux informations d'alimentation électrique ajustées, et alimenter en électricité la BBU (10) et la RFU (11) conformément à la quantité d'alimentation électrique correspondant aux informations d'alimentation électrique ajustées.

11. Dispositif de réseau d'accès radio, RAN, selon la revendication 9, dans lequel le module d'ajustement (102) comprend :
un premier sous-module de demande (1021), configuré pour demander au terminal des informations d'alimentation électrique effectives du port de terminal si la seconde puissance d'émission est supérieure à la première puissance d'émission, le port de terminal étant un port connectant le terminal au dispositif de réseau d'accès radio, RAN;
un premier sous-module de réception (1022), configuré pour recevoir les informations d'alimentation électrique effectives ; et
un premier sous-module de détermination (1023), configuré pour déterminer que les informations d'alimentation électrique effectives garantissent que la RFU (11) fonctionne sur la base de la seconde puissance d'émission, les informations d'alimentation électrique effectives étant des informations d'alimentation électrique ajustées.

12. Dispositif de réseau d'accès radio, RAN, selon la revendication 9, dans lequel le module d'ajustement (102) comprend :
un second sous-module de demande (1024), conçu pour faire en sorte que la BBU (10) envoie au terminal une demande d'ajustement d'alimentation électrique si la seconde puissance d'émission est supérieure à la première puissance d'émission afin que le terminal ajuste les informations d'alimentation électrique destinées au dispositif de réseau d'accès radio, RAN, conformément à la demande d'ajustement d'alimentation électrique ;
un second sous-module de réception (1025), configuré pour recevoir les informations d'alimentation électrique ajustées ; et
un second sous-module de détermination (1026), configuré pour déterminer que les informations d'alimentation électrique ajustées garantissent que la RFU (11) fonctionne sur la base de la seconde puissance d'émission.

13. Dispositif de réseau d'accès radio, RAN, selon l'une quelconque des revendications 9 à 12, dans lequel la BBU (10) comprend en outre :
un module de mise à jour (105), configuré pour mettre à jour la première puissance d'émission stockée à l'avance conformément aux informations d'alimentation électrique ajustées.

14. Dispositif de réseau d'accès radio, RAN, selon l'une quelconque des revendications 8 à 12, comprenant en outre l'interface (13), configurée pour connecter la BBU (10) au terminal, le terminal envoyant les informations d'alimentation électrique à la BBU (10) par l'intermédiaire de l'interface (13) ; et l'interface (13) étant en outre connectée à la PMU (12), et le terminal fournissant la quantité d'électricité à la PMU (12) par l'intermédiaire de l'interface (13) conformément aux informations d'alimentation électrique ajustées.
